# EUROPÄISCHE PATENTSCHRIFT

(11) **EP 0 722 561 B1**
(45) Veröffentlichungstag und Bekanntmachung des Hinweises auf die Patenterteilung: **24.04.2002**
(21) Anmeldenummer: 95925731.2
(22) Anmeldetag: 27.07.1995
(51) Int. Cl.: G01L 1/20, E05F 15/00

(54) **FLEXIBLES HOHLKAMMERPROFIL ALS UNTERBRINGUNGS-, SCHUTZ- UND BETÄTIGUNGSPROFIL FÜR FORCE SENSING RESISTOREN(TM)**
FLEXIBLE HOLLOW CHAMBER SECTION SUITABLE AS HOUSING, PROTECTING AND ACTUATING SECTION FOR FORCE SENSING RESISTORS(TM)
PROFILE SOUPLE A CHAMBRE CREUSE POUR LOGER, PROTEGER ET ACTIONNER DES "FORCE SENSING RESISTORS"(TM)

(30) Priorität: 04.08.1994 DE 4427537
(43) Veröffentlichungstag der Anmeldung: 24.07.1996
(73) Patentinhaber: DaimlerChrysler AG, 70567 Stuttgart (DE); I.E.E. International Electronics & Engineering S.à.r.l., L-2632 Luxembourg (LU)
(72) Erfinder: LEHNEN, Hans-Günter, D-66687 Wadern-Noswendel (DE); GAMERDINGER, Hans, D-71263 Weil der Stadt (DE); GRIESBACH, Peter, D-75395 Ostelsheim (DE); MICKELER, Reinhold, D-71155 Altdorf (DE); PETRI, Volker, D-71134 Aidlingen (DE); WITTE, Michel, L-1420 Luxembourg (LU); LORIG, Roland, D-54675 SINSPELT (DE); SCHMITT, Stefan, D-54293 Trier (DE)
(74) Vertreter: Schmitt, Armand
(86) Internationale Anmeldenummer: DE9500980
(87) Internationale Veröffentlichungsnummer: WO9604537

(56) Entgegenhaltungen:
- EP-A- 0 522 280
- DE-U- 9 407 645
- GB-A- 2 280 646
- LU-A- 87 942
- PATENT ABSTRACTS OF JAPAN vol. 9 no. 232 (P-389) [1955] ,18.September 1985 & JP,A,60 088334 (NIPPON DENSO K.K.) 18.Mai 1985,

## Beschreibung

Aufgrund in immer stärkeren Masse gültiger Vorschriften, dass automatisch schließende Bauteile nicht mehr ohne Einklemmschutz für Finger, Hände oder andere Körperteile zur Anwendung kommen dürfen, gibt es zur Zeit immer mehr Interesse, insbesondere in der Automobilindustrie, an wirksamen Einklemmschutzsystemen, im folgenden kurz EKS genannt, welche ein Einklemmen von Körperteilen bei elektrisch betätigten Bauteilen wie Fensterheber, Schiebedächern, Türen u.s.w. verhindern sollen. Hierzu gibt es bereits verschiedene Systeme, Profile aus leitenden Elastomeren, Profile mit einextrudierten Drähten, Infrarot-Lichtschranken u.s.w.. Alle Systeme lassen jedoch bei Aktion nur einen Ja/Nein-Vergleich zu, sind mehr oder weniger anfällig beim Handling und Verbau und sie sind nicht in Bezug auf eintretende Aktion einstellbar.

Fa. Interlink Electronics Europe, Zone Industrielle, L-6401 Echtemach / Luxemburg, im folgenden IEE genannt, ist Inhaber intemationaler Patente für die Force Sensing Resistor™ Technologie (FSR™ und Force Sensing Resistor™ sind Warenzeichen von IEE) und hat FSR™ entwickelt, welche gerade als Schaltelement für solche EKS bei elektrischen Fensterhebem, elektrischen Schiebedächem und einer Vielzahl anderer elektrisch bewegter Teile, bei welchen eine Einklemmung verhindert werden soll, eingesetzt werden können und welche gegenüber anderen Systemen wesentlich sensibler reagieren und sich in Bezug auf eintretende Aktionen einstellen lassen. Eine solche Anwendung der FSR Sensoren ist beispielsweise in der LU-A-87 942 beschrieben. Dieses Dokument beschreibt ein Sicherheitssystem zur Verhinderung einer Einklemmung an einem elektrisch betätigten Schließelement, bei der ein FSR Sensor auf die Kante des Schließelementes aufgeklebt wird. Im Fall einer Einklemmung zwischen der Kante des Schließelementes und einem zugeordneten Rahmen wird der FSR Sensor ausgelöst und die Bewegung des Schließelementes unterbrochen.

Um EKS mittels eines FSR™ entsprechend einsetzen zu können, benötigt man jedoch einen Bauraum, in welchen der FSR™ untergebracht werden kann, welcher ihm Schutz vor schädigenden Umwelteinflüssen bietet, in welchem eine Schaltfunktion möglich ist und welcher ihm vielfältige Anbringungsmöglichkeiten bietet. Ein solcher Bauraum ist beispielsweise in der DE-U1-94 07 645 beschrieben. Dieses Gebrauchsmuster beschreibt eine elektrische Schaltleiste. die in einem Gummiprofil angeordnet ist. Das Gummiprofil mitsamt der Schaltleiste wird unmittelbar an der Kante des Schließelementes angebracht, so dass eine Einklemmung zu einer Verformung des Gummiprofils und somit zu einer Auslösung der Schaltleiste führt.

Zweck der Erfindung ist, dem FSR™ dies alles zu bieten und den Einsatz insbesondere in der Automobilindustrie im Bereich von Einklemmgefahren elektrisch betätigter Einheiten wie Fensterheber, Schiebedächer, etc. zu ermöglichen.

Mit einem Hohlkammerprofil, welches den FSR™ aufnimmt, ihn vor direkten Umwelteinflüssen wie Wasser, Staub, etc. schützt und dem Einsatzzweck entsprechend so aufgebaut ist, dass eine gewünschte Verformung der Hohlkammer durch den auf sie einwirkenden Druck den FSR™ so belastet, dass eine Schaltfunktion erfüllt wird, ist die Forderung nach einem entsprechenden Bauraum erfüllt. Erfindungsgemäß ist das Hohlkammerprofil dabei als Führungsprofil ausgestaltet, das einen im wesentlichen U-förmigen Querschnitt aufweist, mit einem Basisbereich und zwei sich von dem Basisbereich erstreckenden Schenkeln, wobei die Hohlkammer in dem Basisbereich des Hohlkammerprofils angeordnet ist

Ein Hohlkammerprofil bietet z.B. die Möglichkeit, diese mit Befestigungsmöglichkeiten (Klebeband, Klemm- oder Einsteckbereichen u.s.w.) auszustatten, welche dem Einsatzort individuell angepasst sind.

Ein weiterer Vorteil des Hohlkammerprofiles ist, dass je nach Breite und Einsatzzweck eines FSR™ in einem EKS eine entsprechende Hohlkammer in Dichtprofilen verschiedenster Art (Randspaltdichtungen von Schiebedächern, Fensterführuhngsprofilen von elektrisch bewegten Scheiben, Türdichtungen bei elektrisch schließenden Türen, etc.) ein- bzw. anextrudiert werden und in der Geometrie den Anforderungen an die Schaltfunktion entsprechend angepasst werden kann.

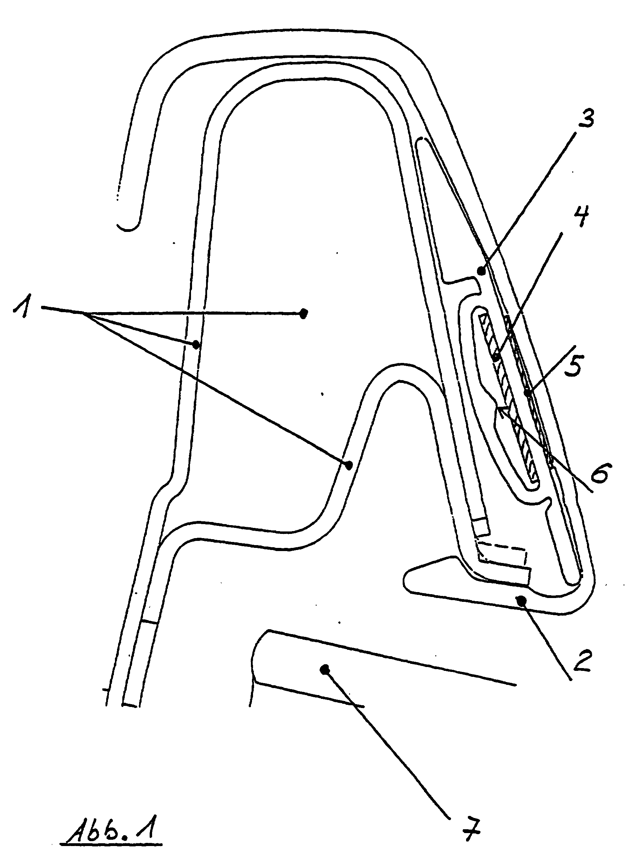

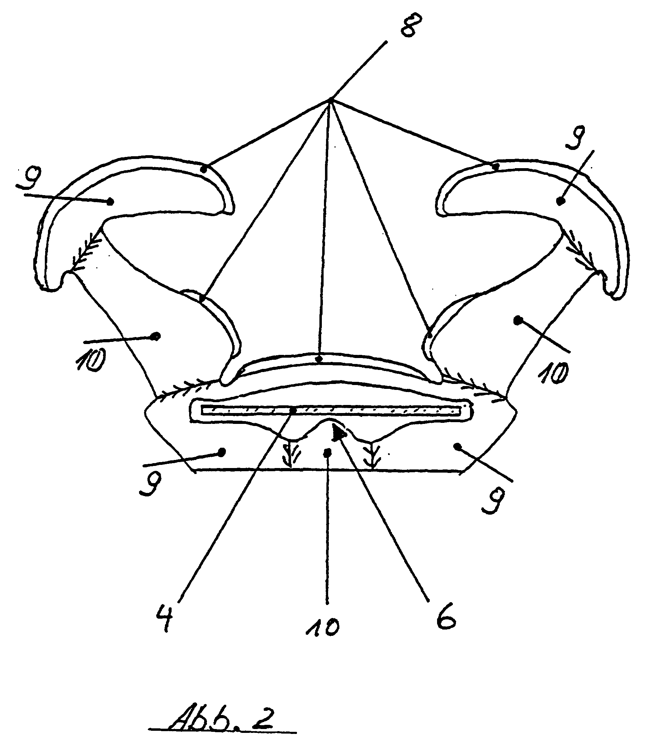

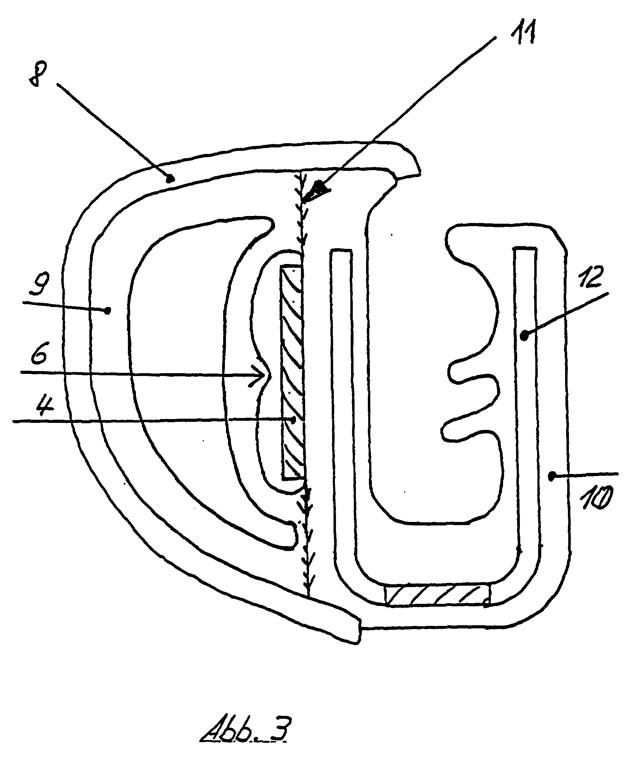

Weitere Erläuterungen zu der Erfindung sind in den in den Abb. 1 - 3 schematisch dargestellten Ausführungsbeispielen zu entnehmen.

### Erläuterung der einzelnen Abbildungen

Abb. 1) Türquerschnitt mit Hohlkammerprofil zum Einkleben in den nicht sichtbaren Bereich zwischen Tür und Blende
Abb. 2) Fensterführungsprofil mit Hohlkammer zur Aufnahme eines FSR™
Abb. 3) Schiebedachdichtung mit Hohlkammer zur Aufnahme eines FSR™
1) Türrahmen
2) Blende
3) Hohlkammerprofil
4) FSR™
5) Klebeband
6) erhabener Auslöse-/Druckpunkt zum Schalten des FSR™
7) Fensterscheibe
8) Flock
9) Weiches Material
10) Härteres Material
11) Trennung hartes / weiches Material
12) Metalleinlage zur Klemmkrafterhöhung

## Patentansprüche

1. Flexibles, gummiartiges, extrudiertes Hohlkammerprofil als Sensoraufnahmeprofil zur Unterbringung und zum Schutz druckaktivierbarer Sensoren, mit einer Hohlkammer, in der ein druckaktivierbarer Sensor anordenbar ist, wobei das Hohlkammerprofil bereichsweise unterschiedliche Härten aufweist, so dass bei einem auf das Hohlkammerprofil einwirkenden Druck das Hohlkammerprofil aufgrund seiner Verformungscharakteristik den druckaktivierbaren Sensor schaltet, **dadurch gekennzeichnet, dass** das Hohlkammerprofil als Führungsprofil ausgestaltet ist, das einen im wesentlichen U-förmigen Querschnitt aufweist, mit einem Basisbereich und zwei sich von dem Basisbereich erstreckenden Schenkeln, wobei die Hohlkammer in dem Basisbereich des Hohlkammerprofils angeordnet ist.

2. Flexibles Hohlkammerprofil nach Anspruch 1, **dadurch gekennzeichnet, dass** das Hohlkammerprofil aus einem Elastomer mit bereichsweise unterschiedlicher Shorehärtegrade und/oder Raumdichten extrudiert ist.

3. Flexibles Hohlkammerprofil nach Anspruch 1 oder 2, **dadurch gekennzeichnet, dass** das Hohlkammerprofil aus mehreren Elastomeren unterschiedlicher Shorehärtegrade und/oder Raumdichten coextrudiert ist.

4. Flexibles Hohlkammerprofil nach Anspruch 2 oder 3, **dadurch gekennzeichnet, dass** der Basisbereich eine geringere Härte aufweist als die Schenkel.

5. Flexibles Hohlkammerprofil nach einem der Ansprüche 1 bis 4, **dadurch gekennzeichnet, dass** das Hohlkammerprofil aus EPDM und/oder TPE und/oder PVC hergestellt ist.

6. Flexibles Hohlkammerprofil nach einem der Ansprüche 1 bis 5, **dadurch gekennzeichnet, dass** in dem Basisbereich des Hohlkammerprofils eine in die Hohlkammer hineinragende wulstartige Erhebung angeordnet ist, die den druckaktivierbaren Sensor bei Belastung der Hohlkammer mit Druck belastet und diesen schaltet.

7. Flexibles Hohlkammerprofil nach Anspruch 6, **dadurch gekennzeichnet, dass** die wulstartige Erhebung ein härteres Material aufweist als der restliche Basisbereich des Hohlkammerprofils.

## Claims

1. Flexible, rubber-like, extruded hollow chamber section as sensor receiving section for housing and protecting pressure-activatable sensors, comprising a hollow chamber in which a pressure-activatable sensor can be disposed, the hollow chamber section having in certain regions various hardnesses, such that in case of a pressure being exerted on the hollow chamber section the hollow chamber section switches the pressure-activatable sensor due to its deformation characteristic, **characterized in that** the hollow chamber section is designed as a guide section having an essentially U-shaped cross-section with a basic region and two limbs extending from the basic region, the hollow chamber being arranged in the basic region of the hollow chamber section.

2. Flexible hollow chamber section according to claim 1, **characterized in that** the hollow chamber section is extruded from an elastomer with various Shore hardnesses and/or bulk densities in certain regions.

3. Flexible hollow chamber section according to claim 1 or 2, **characterized in that** the hollow chamber section is co-extruded from several elastomers with various Shore hardnesses and/or bulk densities.

4. Flexible hollow chamber section according to claim 2 or 3, **characterized in that** the basic region comprises a lower hardness than the limbs.

5. Flexible hollow chamber section according to one of claims 1 to 4, **characterized in that** the hollow chamber section is made of EPDM and/or TPE and/or PVC.

6. Flexible hollow chamber section according to one of claims 1 to 5; **characterized in that** in the basic region of the hollow chamber section a bead-like elevation projecting into the hollow chamber is arranged which stresses the pressure-activatable sensor with pressure and switches it when the hollow chamber is stressed.

7. Flexible hollow chamber section according to claim 6, **characterized in that** the bead-like elevation comprises a harder material than the remaining basic region of the hollow chamber section.

## Revendications

1. Profilé souple à chambre creuse, gommeux, extrudé, servant de profilé de logement de capteurs pour loger et protéger des capteurs pouvant être activés sous l'effet d'une pression et présentant une chambre creuse dans laquelle peut être placé un capteur pouvant être activé sous l'effet d'une pression, le profilé à chambre creuse présentant différentes duretés d'une partie à l'autre de manière que, en cas de pression agissant sur le profilé à chambre creuse, le profilé à chambre creuse commande, en raison de ses caractéristiques de déformation, le capteur pouvant être activé sous l'effet d'une pression, **caractérisé en ce que** le profilé à chambre creuse est réalisé comme profilé de guidage présentant une section transversale pour l'essentiel en forme de U ayant une partie de base et deux branches qui s'étendent au départ de cette partie de base, la chambre creuse se trouvant dans la partie de base du profilé à chambre creuse.

2. Profilé souple à chambre creuse selon la revendication 1, **caractérisé en ce que** le profilé à chambre creuse est extrudé au départ d'un élastomère présentant différents degrés de dureté Shore et/ou différentes densités volumiques d'une partie à l'autre.

3. Profilé souple à chambre creuse selon la revendication 1 ou 2, **caractérisé en ce que** le profilé à chambre creuse est coextrudé au départ de plusieurs élastomères présentant différents degrés de dureté Shore et/ou différentes densités volumiques.

4. Profilé souple à chambre creuse selon la revendication 2 ou 3, **caractérisé en ce que** la partie de base présente une dureté moindre que les branches.

5. Profilé souple à chambre creuse selon l'une des revendications 1 à 4, **caractérisé en ce que** le profilé à chambre creuse est fabriqué en EPDM (monomère d'éthylène, propylène et diène) et/ou en TPE (élastomères thermoplastiques) et/ou en PVC (polychlorure de vinyle).

6. Profilé souple à chambre creuse selon l'une des revendications 1 à 5, **caractérisé en ce que** dans la partie de base du profilé à chambre creuse est aménagée une saillie qui pénètre en forme de bourrelet dans la chambre creuse, cette saillie exerçant, lorsque la chambre creuse est soumise à une pression, une pression sur le capteur qui peut être activé sous l'effet d'une pression et commandant celui-ci.

7. Profilé souple à chambre creuse selon la revendication 6, **caractérisé en ce que** la saillie en forme de bourrelet présente une matière plus dure que le reste de la partie de base du profilé à chambre creuse.
